## Europäisches Patentamt
## European Patent Office
## Office européen des brevets

(11) Publication number: **0 150 906**
**B1**

(12)

# EUROPEAN PATENT SPECIFICATION

(45) Date of publication of patent specification: **18.01.89**

(51) Int. Cl.⁴: **F 16 B 13/02**

(21) Application number: **85300062.8**

(22) Date of filing: **04.01.85**

(54) **Helical dowel.**

(30) Priority: **05.01.84 GB 8400160**

(43) Date of publication of application:
**07.08.85 Bulletin 85/32**

(45) Publication of the grant of the patent:
**18.01.89 Bulletin 89/03**

(84) Designated Contracting States:
**BE DE FR GB IT NL SE**

(56) References cited:
**AT-B- 137 468**
**AT-B- 236 708**
**DE-A-2 118 153**
**DE-B-1 167 509**
**DE-C- 89 502**
**DK-C- 32 847**
**FR-A- 469 811**
**FR-A- 823 574**
**US-A-1 460 557**
**US-A-4 171 634**

(73) Proprietor: **OLLIS, William John Bernard**
**6A, Church End Haddenham**
**Buckinghamshire HP17 8AH (GB)**

(73) Proprietor: **Ollis, William Henry**
**6A, Church End Haddenham**
**Buckinghamshire HP17 8AH (GB)**

(72) Inventor: **OLLIS, William John Bernard**
**6A, Church End Haddenham**
**Buckinghamshire HP17 8AH (GB)**
Inventor: **Ollis, William Henry**
**6A, Church End Haddenham**
**Buckinghamshire HP17 8AH (GB)**

(74) Representative: **Arthur, George Fitzgerald et al**
**KILBURN & STRODE 30, John Street**
**London WC1N 2DD (GB)**

## Description

This invention relates to fastening devices and is a improvement on the formed tube the subject of British Patent Specification No. 2107017 which is sometimes referred to as a helical dowel. The dowel described in that specification has been formed by extruding aluminium through an extrusion die and imparting a twist to the formed material. Although in most ways the helical dowel described in that specification is very satisfactory, it tends to be a little expensive because of the method of manufacture, and an object of the present invention is to provide a fastening device which can fulfill all the functions of that helical dowel more-or-less equally effectively, while yet being simpler and cheaper to manufacture and also can fulfill other fixing functions.

According to one aspect of the present invention, a fastening device comprises a metal tube of uniform cross section with a wall which is thin compared with a cross sectional diameter or width of the tube, which tube has been deformed to have at least one external elongate projection with a sharp edge and has helical twist along its length. Preferably there are a number of elongate projections each with its sharp edge which projections are circumferentially spaced around the outside of the tube.

There may also be one or more internal projections.

In a preferred form of the device, these internal projections extend similarly helically.

For some applications there may be an external helical thread superimposed around the external elongate projectional projections, but of a much shallower pitch than the external projections if they are of helical form as described above. Similarly there may be an internal helical thread formed on any internal sharp edge projections.

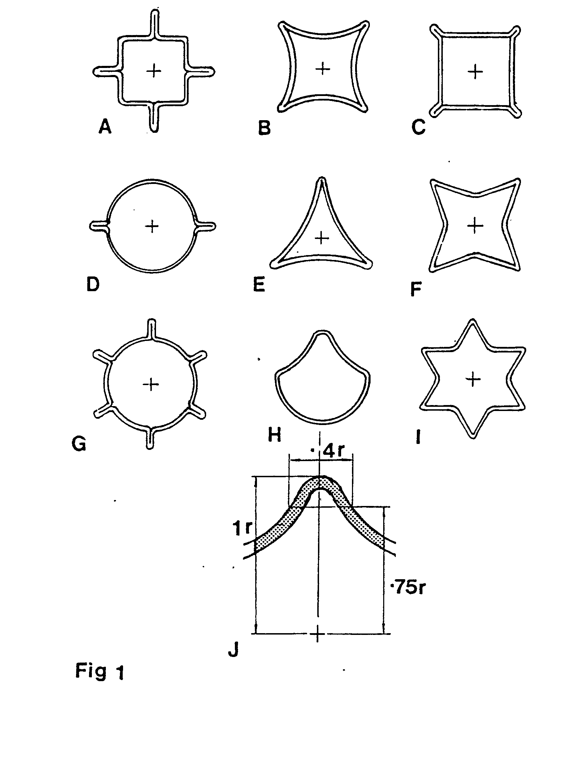

Some examples of cross sections of deformed metal tube embodying the invention are shown in FIGURE 1, of the accompanying drawings which will be referred to in more detail below.

The previously proposed manufacturing method of first extruding a section and then twisting it required that the section included a hollow cylindrical core to prevent irregularities of pitch arising from local inward collapse of a section when stressed torsionally. Sections could not therefore be designed to deflect inwardly or be expanded outwardly to a useful extent when inserted into materials to be secured together as can be done with sections shown in FIGURE 1 having ridges comprised of folds which are not tightly closed.

The fastening device can be used in many ways, and in particular in the ways described in British patent Specification No. 2107017.

However, in one particular use the fastening device constituted by a single metal tube has external elongate helical projections with sharp edges, but at opposite ends of the tube the helices are of opposite hand so that the device can be used as a dowel for locating and securing two timber or other members together by rotation of the tube in one sense.

In another form useful in some applications, the tube is formed with a head at one end which can be driven by a hammer or rotary hammer power tool and then the tube may be deformed or closed at the other end to provide a sharp leading or cutting edge for making an incision to facilitate driving of the device into wood or other material by axial or rotary impacts.

For some applications it is desirable to have lines of weakness perhaps along the sharp edges, so that for a short length at either end of the tube the material can be separated at the lines of weakness to enable the end to be spread to provide a fastening device at the end of the tube. Lines of weakness can be fairly readily formed by machining off a little of the outer diameter of the formed tube, or perhaps by running a female screw thread forming die along the tube to cut notches in the elongate projections.

A length of the metal tube can be used in combination with a surrounding guide sleeve within which the tube can move, which sleeve can be held for driving the tube within it, and can act to maintain the tube straight while it is perhaps being hammered into position. Such a guide sleeve could have one or more internal teeth for running along the groove between two adjacent helical projections, and for cutting through the extremities of a section at a required position by rotating the sleeve when relative axial and rotary movements of the contained section are restrained so that parts of the section can be snapped off as required in the processes of insertion.

Again any form of the tube can be used in combination with an internal spreading device which can be driven within the tube along its length or part of its length to deform the tube outwardly perhaps to expand the projections to bite into surrounding material, or perhaps to perform a local enlargement at one end to prevent the tube from being withdrawn from a material in which it has been inserted.

According to another aspect of the invention, in a method of making helical dowel, a metal tube preferably with a thin walled circular cross section — is fed axially into a forming die for forming one or more external helical projections on the outside of the tube while the die is permitted to turn in relation to the unformed tube. Such a method enables the section of the tube to be deformed while the helical projections are formed from the deformation in a single operation in which the unformed tube moves axially in relation to the die so that a long length of stock can be formed in a single operation.

Preferably, the forming die has a lead-in portion which is capable of accommodating the end of the unformed metal tube, and serves to guide that tube into the forming portion of the die.

According to another aspect of the invention, a forming die arranged to form one or more elongate external helical projections on the outside of a metal tube, is mounted in a holder through a bearing permitting the die to rotate. Preferably the die has a lead-in portion for accommodating the end of the unformed metal tube and for guiding it into the forming portion of the die.

The invention includes a method of using a fastening device as defined in which the device is driven into a piece of material, and the elongate projection or projections cut corresponding grooves in the material. In some materials it is better to drill a pilot hole into which the fastening device can be driven, and the pilot hole may be of such diameter as to accommodate most of the cross section of the formed tube but not the peaks of the elongate projections whic cut their way through the material.

In another method in accordance with the invention, a fastening device is slid into a slightly oversize hole and then the tube is deformed by driving a component down its centre to cause the elongate projections to be forced into the wall of the material. The internal component can act on internal projections formed in the wall of the tube.

The tube may be of a hard, but non-corrosive metal, for example, copper, but for some applications aluminium, steel alloy, bronze, or brass, may be used for example. It will be flame proof.

The sharp edge referred to will probably not be knife edge sharp because of the manner in which the tube is deformed to form the projections, but nevertheless, the edges can be sharp enough to be capable of cutting into the surface of brick work, or concrete or timber or perhaps some plastics materials.

However, if knife edge sharpness is required for some materials, this can be provided within the same stage of manufacture by mounting a thin die plate with cutting edges directly onto the end of the forming die so that it travels along the helical ridges which have been formed to shave off parts of their tips to leave a sharp angle.

Reference has been made to thin walled tube and that phrase is used not in a strictly limiting sense but to indicate that the thickness of the wall is small compared with the overall width or diameter of the tube, or putting it another way that the material and the cross section are such that it is a reasonably practical matter to deform the tube to provide it with the external projections by passing it through a forming die in conjunction with a deforming or restraining tool within the centre bore if necessary.

In one example, a copper tube of 9 millimetres overall diameter has a wall thickness between .15 and .5 millimetres formed into any of the sections shown in FIGURE 1.

The invention may be carried into practice in various ways, and certain embodiments will now be described by way of example, with reference to the accompanying drawings in which:

FIGURE 1 is a series of sketches showing the sections of various formed tubes according to the invention;

FIGURE 2 shows two sketches demonstrating the application of forces in the sections of FIGURES 1D and 1I;

FIGURES 3, 4, 5, and 6 are perspective views of further forms of tube in accordance with the invention;

FIGURES 7 and 8 are sketches showing how formed tube can be further processed to produce special types of tube;

FIGURES 9, 10 and 11 are sketches showing the tube according to FIGURE 1D in combination with various kinds of fitting.

FIGURE 12 is a cross section through a die for forming the tube and;

FIGURES 13—27 are sketches showing various applications of the formed tube.

The tube is formed from thin walled metal tube preferably of circular cross section although other starting cross sections may be possible, and generally of a hard, strong, and springy metal, or example copper or brass. The circular or other section tube is fed through a die to be described below so as to have for example one of the sections of FIGURE 1 each of which will be observed to have one or more external fairly sharp edge projections formed by folding the walls of the tube, which are reflected at the internal section due to the formation being essentially a process of deformation of existing metal rather than a cutting process to remove unwanted metal.

An appropriate definition of a fairly sharp edge to give efficient cutting or gripping around the perimeters of the sections is that the width of a projecting fold or ridge, measured at right angles to the lines along the ridge at a distance of 0.75 of the overall radius from the centre lies within a dimension of 0.4 of that radius, as set FIGURE 1J.

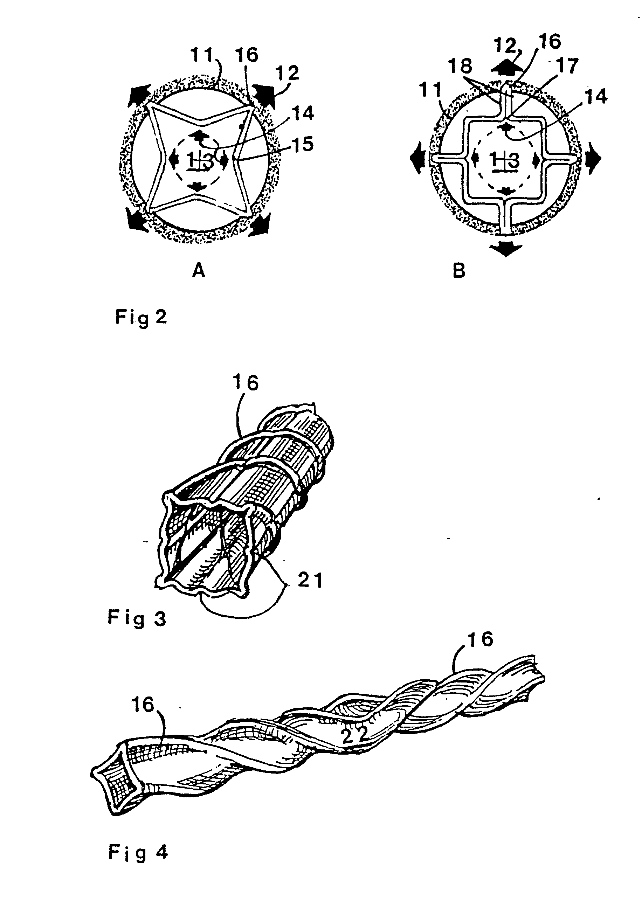

Although it is not apparant from FIGURES 1 and 2, it can be seen from FIGURE 3 and some of the other figures that the external sharp edges curve helically around the length of the tube with a fairly substantial pitch angle.

The formed tube is for use in general by driving longitudinally into a pilot hole which may be slightly less in diameter than the overall diameter of the formed tube section or may be corresponding to that external diameter.

FIGURE 2A shows how a tube with the section shown at FIGURE 1D, if driven longitudinally into a bore 11 slightly less in diameter than the overall diameter of the section, can produce substantial outward stresses on the wall of the hole as indicated at 12 and can in fact cut through certain materials to form helical grooves in the bore. The pressure is maintained by the elastic nature of the tube material.

In one way of using the tube after it has been driven or slid into a bore, such as the bore 11, an internal component indicated generally at 13 is driven into the interior of the tube to stress the tube as indicated by the arrows 14 at the indentations 15 in the section and that also has the effect of forcing the external helical projections 16 outwards into the wall of the bore 11.

A similar effect is achieved in the embodiment of FIGURE 2B where internal projections such as 17 are formed on either side of a fold 18 defining one of the external projections 16.

In the tube of FIGURE 3, in addition to the helical projections 16 which in this case correspond with those on the section of FIGURE 1A, there are internal projections 21 which are not helical but extend parallel with the axis of the tube. For that purpose circular tube may be passed axially along a die to form the four internal projections 21 before the section is deformed, as will be described below.

FIGURE 4 shows how a single length of tube 22 can have its external helical projections 16 of one hand at one end, and of the other hand at the other end. That type of component is useful for securing two timber members together, for example, whether or not there is to be a space between them.

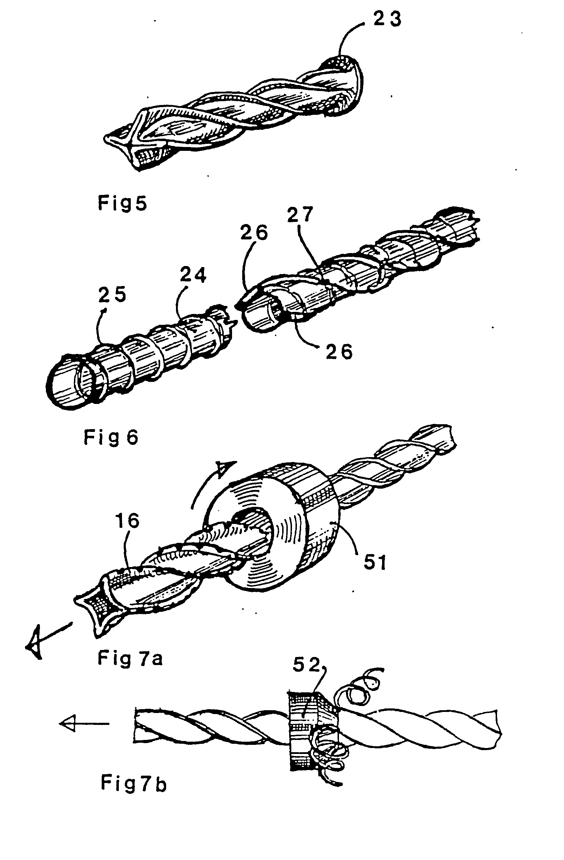

FIGURE 5 shows how a length of tube with a section such as that of FIGURE 1B can be formed into a hollow fluted nail by forming a head 23 at one end enabling it to be driven into timber by a hammer.

FIGURE 6 shows how the circular tube 24 can be first formed with circular ridges or a shallow external helical rim 25 before being formed to have the external projections 26 of substantial helical pitch formed around it as shown at the right hand side of FIGURE 6. FIGURE 6 shows how the helical projections of substantial pitch have serrations 27 formed in them corresponding to the positions of the rings 25 where they are intersected by the projections. Such serrations can help the projection to act in the manner of a saw for cutting a slot in the material in which the tube is to be driven.

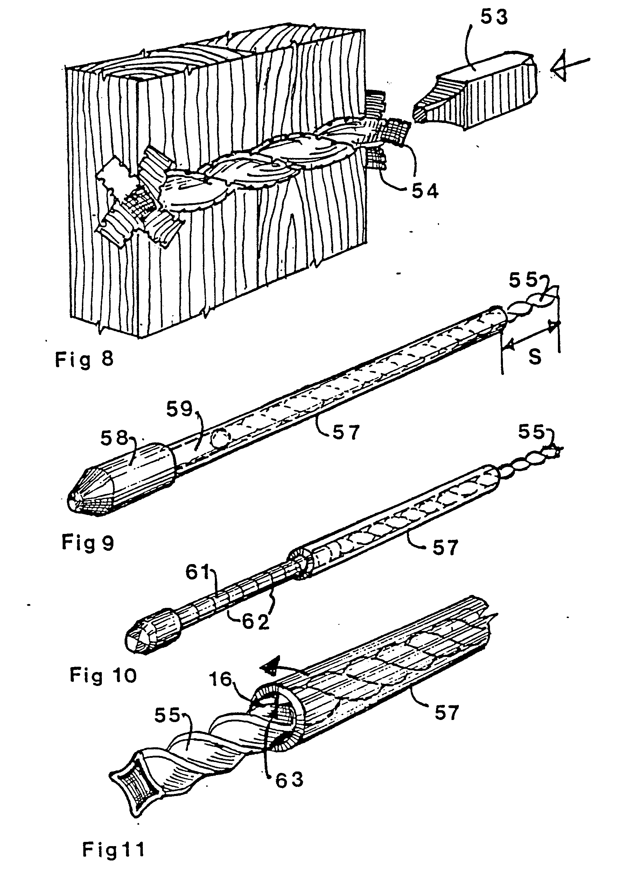

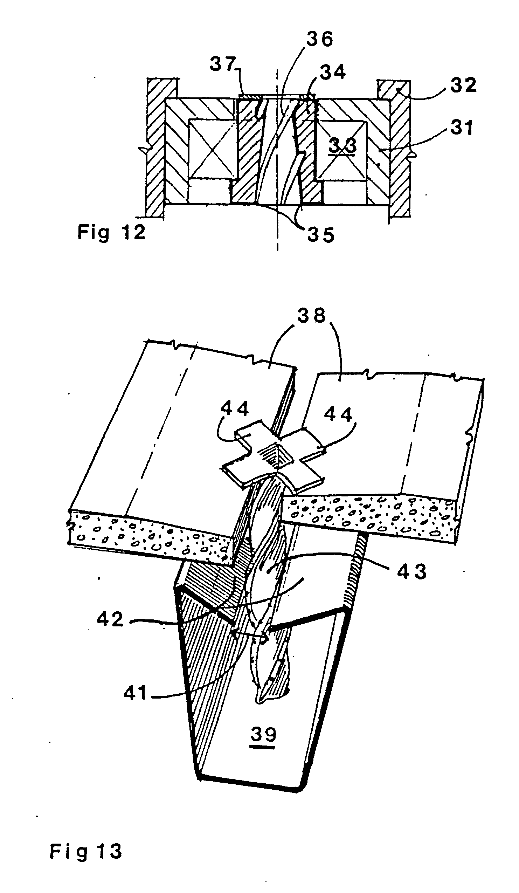

FIGURE 7a shows how tube with a section of FIGURE 1B can be passed through an ordinary screw threading die 51 to be formed with external serrations on the projections 16 to provide lines of weakness. A similar effect can be achieved as shown in FIGURE 7b by use of a ring cutting tool 52 for removing material from the edges of the projections. Then by driving a pyramid ended tool 53 into the ends of a length of the formed tube the wall can be split along the lines of weakness to produce flanges 54 for use when joining panels of wood together, as shown in Figure 8 or in the manner described with reference to Figure 13 for fixing a panel to framework.

FIGURE 9 shows how a length of the tube as shown at 55 can be a slide fit in an external circular guide 57 having an anvil head 58 with a pin 59 extending into the end of the guide 57 against the end of the tube 55. Such an arrangement enables the tube 55 to be driven into a wall or perhaps a timber member by only a specified distance S leaving the remainder of the tube projecting for use in attaching some other component. FIGURE 10 shows a somewhat similar arrangement except that instead of the anvil device 58, 59 the tube 55 is driven by a steel shaft 61 while being steadied by the external guide 57 in which both components are a slide fit.

The rod 61 has graduations 62 so that the tube 55 can be driven into the member by just the desired measurement amount. In FIGURE 11, the external guide 57 of FIGURES 9 and 10 is formed with internal projections 63 just at the end, which can run along the helical projections 16 on the tube 55 to assist in turning the tube as it is driven into a member at the other end of the guide 57. The internal projections 63 may have sharpened edges to cut by rotation through the extremities of the section when a sufficient length of it has been firmly driven in so that the remainder can be easily snapped off flush with the work surface.

The die whose cross section is shown in FIGURE 12 is suitable for forming any of the sections of FIGURE 1 from thin wall circular tube. The die has an external cylindrical ring 31 fitted into a die holder 32 and housing a ball bearing 33 for an internal die ring 34 which is formed with a lead in portion 35 of circular section with curved or bevelled edges to accommodate the end of the unformed tube and with internal grooves 36 of helical form for forming the helical projections as the circular tube is fed through the die. A finishing die plate 37 may be mounted on the far end of the internal die ring 34 to true up, sharpen or shave off parts of the projecting ridges as they leave the die.

If the tube is fed longitudinally, as the helical projections 16 are formed, the inner ring 34 constituting the die proper can rotate in the external ring 31 so that the unformed tube can be fed continuously axially into the die. The die will be turned as the helical projections are formed. That enables a long length of tube to be fed continuously through the die, without the incoming or outgoing lengths of the tube being rotated.

Some uses of the formed tube will now be described.

FIGURE 13 shows how formed tube generally corresponding to one end half of the tube of FIGURE 8 can be used to secure pannelling 38 against a box section framework member 39 having a gap 41 defined between a pair of inwardly inclined flanges 42. While the panels 38 are held in position against the section and generally in line with the gap 41, the tube 43 is hammered into the gap 41 so that it will tend to cut nicks in the edges of the flanges 42 and so will screw into the section as it is driven in, until the flanges 44 can be driven into the face of the panels 38. Subsequent withdrawal is resisted by the nicks engaging with the inwardly inclined flanges so that by deflecting, the gap is reduced to tighten the grip.

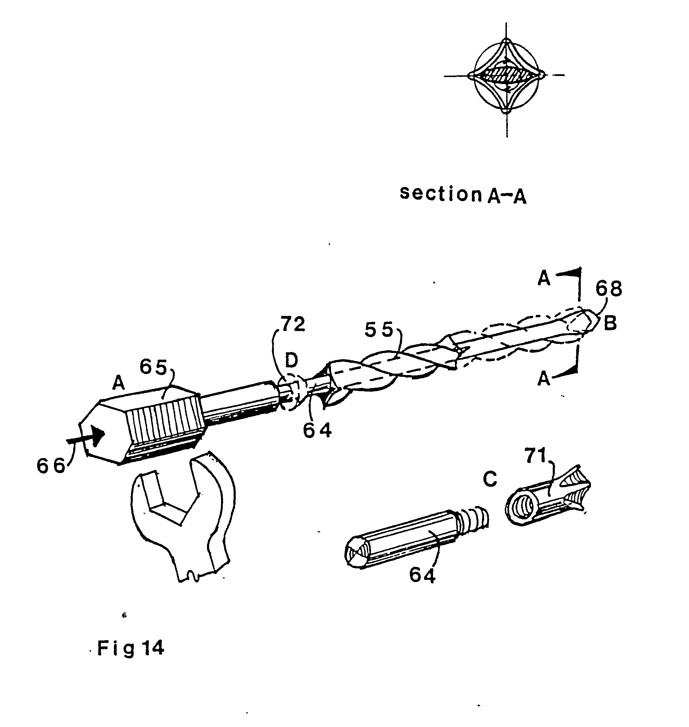

FIGURE 14 shows how a standard length of formed tube 55 can be used in conjunction with a spigot 64 extending within it. In general the tube 55 can be forced into a bore by driving and as shown in FIGURE 14 at A the spigot can have a hexagonal head 65 for turning by a spanner 67 or for driving by a hammer as indicated by the arrow 66. Again as shown at B the end of the spigot can be formed into a head 68 with a flat rather elongate cross section, as shown at 69 in the section A—A, extending beyond the end of the tube 55 when it is driven into the bore. After the tube 55 is driven into the bore, the spigot can then be partly withdrawn and the head 68 rotated by turning the hexagonal head 65 to expand the tube somewhat, pushing out the internal projections shown in the cross section forcing the external projections into good frictional contact with the walls of the bore where the grooves have been cut by the projections 16. Then the spigot 64 can be slid out, being allowed to rotate slightly as it does so. The detail C shows a somewhat similar head 71 which can be used to expand the inner end of the tube by forcibly pulling the head 65, after which the spigot 64 can be unscrewed from it leaving it in position. Detail D shows how the spigot can carry a conical section washer 72 and when such a washer is driven into the tube the outer end will be splayed and forced into the surface of the of the wall of the member containing the bore.

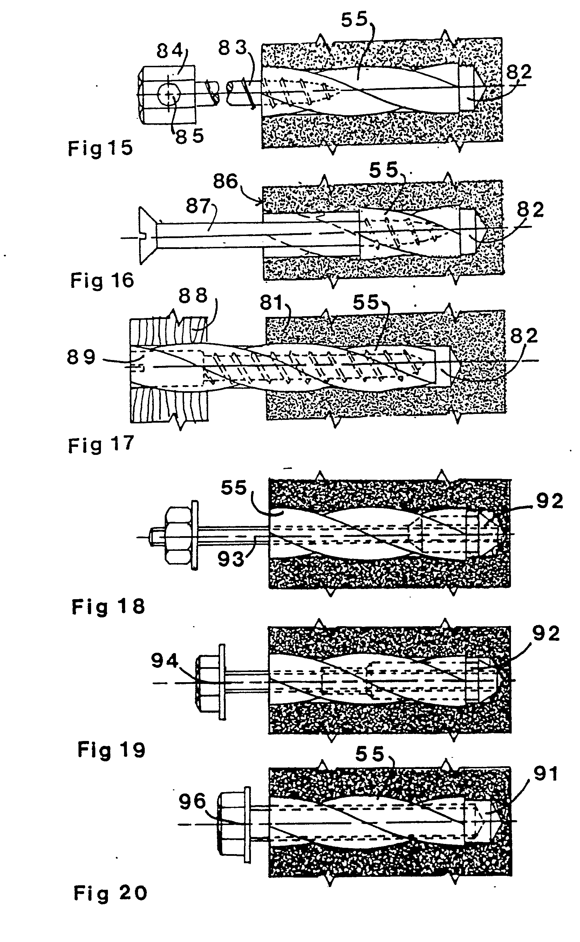

FIGURE 15 shows a section of masonry wall 81 in which a pilot hole 82 is bored, and into which in turn a length of the formed tube is driven. The example shown has the cross section of FIGURE 1B and the projections 16 are on a diameter a little greater than the diameter of the bore 82 generally as indicated in FIGURE 2a, so that as the tube, is driven into the bore the projections cut into the wall of the bore and the tube is turned in accordance with the helix angle.

Then a wood screw 83 with ( in the example shown) a hexagonal head 84 having a hole 85 for fixing a wire or hook is screwed into the tube 55 with the screw thread cutting into the internal projections, such as 15 in FIGURE 2a. Various different types of fittings can be screwed into such a tube 55 when it is firmly positioned in the masonry 81.

In FIGURE 16 a shorter length of tube 55 is mounted on the end of a wood screw which is hammered into a bore hole so that the tube 55 is driven well below the surface 86 of the masonry and then the wood screw is screwed further into the tube which it will expand to give a tighter grip.

For securing a wood batten 88 to the masonry 81, as shown in FIGURE 17, with a gap between them if required, a length of tube 55 is mounted on the end of a long bolt 89 with a wood screw type of thread. A pilot hole 82 is bored through the wood battern and on into the masonry. The end of the tube is driven through the batten by hammer blows on the head of the bolt, so that it projects by a distance equal to the gap, if one is required. The end of the tube is then positioned on the mouth of the bore in the masonry and the tube is driven further in until the other end is flush with the outer surface of the batten. The bolt 89 is then screwed in to its full extent thereby expanding the end of the tube in the masonry, which it has not previously entered, and expanding the other end, by the entry of the bolt head.

In the arrangement of FIGURE 18 a tube 55 is mounted on a threaded rod 93 with a spreader 92 partially screwed onto one end and a nut with a washer screwed onto the other end so that the washer is in contact with the tube. A bore slightly less in diameter than the tube is made in the masonry and the tube is driven into this. The nut is then tightened up and the spreader is pulled into the far end of the tube causing it to expand and grip tightly into the bore, deep in the masonry. The nut and washer can then be taken off so that a drilled fixture can be pushed onto the end of the threaded rod 93 and secured to the masonry by refixing the nut and washer.

The arrangement of FIGURE 19 is similar but in that case the threaded rod and nut are replaced by a hexagonal headed bolt 94 which can be unscrewed from the spreader 92 after it has been used to expand the tube in the masonry and then it can be reused to secure a fixture.

In FIGURE 20, a tube 55 is pre-threaded onto the end of a bolt 96 and driven into a pilot bore 91 of a slightly smaller diameter. The bolt is then screwed in further, expanding the rest of the tube.

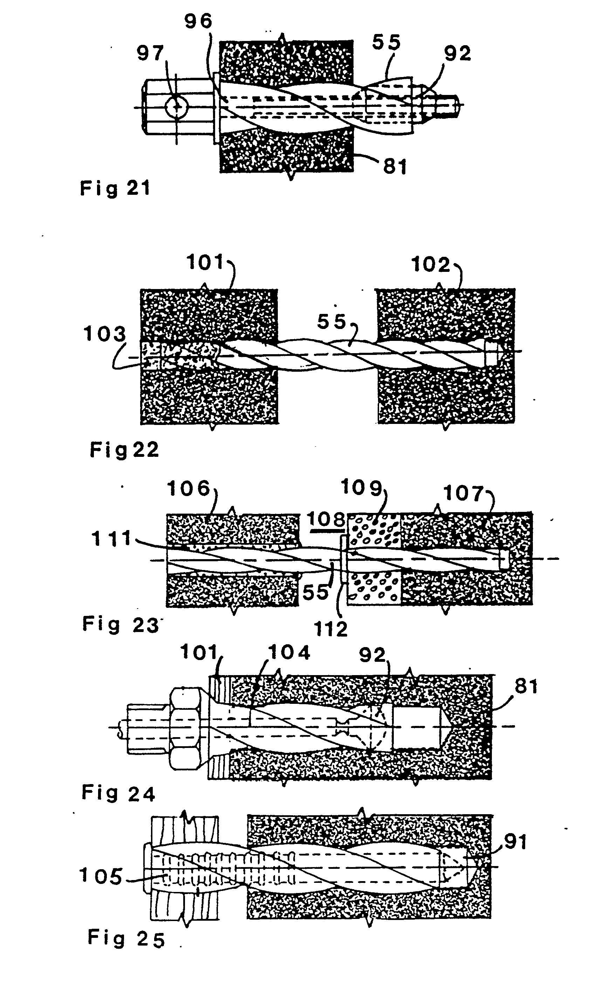

In FIGURE 21, a tube 55 is mounted on a threaded bolt 96 with a hole 97 through its head for attaching a wire and retained by a spreader 92 at the other end. This assembly is then driven into a pilot bore of slightly smaller diameter than the tube so that its far end projects into a cavity space beyond the wall 81 of a hollow block, for example. The bolt head is then rotated and the spreader is pulled through the tube causing it to expand until it meets resistance at the mouth of the bore.

In FIGURE 22, a pilot hole 91 is bored through one leaf 101 and on into the other leaf l02 of a masonry cavity wall (in which the original wall ties are assumed to have become adversely affected by corrosion).

A tube 55 which has a slightly larger overall diameter than the bore is driven in, using a punch with a long spigot, so that it provides a bridge across the cavity, anchored in the bores in the masonry on both sides by means of the threads it will have cut in their walls. The end of the tube on the outer face is driven beyond that face by a shoulder formed on the punch and the bore opening is pointed with mortar or other suitable material l03, to match the masonry and this is securely anchored by being squeezed into and around the end of the tube.

The arrangement in FIGURE 23 is similar to FIGURE 22 but a new masonry wall leaf l06 is being built outside an existing external wall l07 with a cavity l08 between the two containing a layer of insulation l09. The insulating sheet is placed against the existing wall and a pilot hole is bored through it and into the wall. A tube 55 having a slightly larger overall diameter is driven into the bore in which it cuts threads to provide anchorage and it is left to project sufficiently for its, other end to be bedded in a mortar joint 111 of the new wall as it is built. A washer 112 may be slipped onthe tube to position the insulation.

In FIGURE 24, a thin sheet of material 101 is being fixed to a wall material 81. A length of tube is mounted on a blind rivet spreader pin 92 with a shaft l04 which is gripped in the conical head of a withdrawing tool 105. A pilot hole slightly less in diameter than the overall diameter of the tube is bored through the sheet material into the wall material. The tube is then driven into the hole by blows on the body of the withdrawing tool which is then used to apply tension to the spreader pin. This results in the head of the pin being pulled into one end of the tube to expand it, while the conical head of the tool is pressed into the other end so that it spreads out to form a head on the tube; finally the shaft snaps from the pin at the neck adjacent to the spreader head 92.

In FIGURE 25, a tube is driven into holes with slightly smaller diameters 91 bored through a batten into a wall. A nail 105 with rings formed on its shank is then driven into the tube to expand it and increase its grip in the batten and the wall, and its head closes the end of the tube.

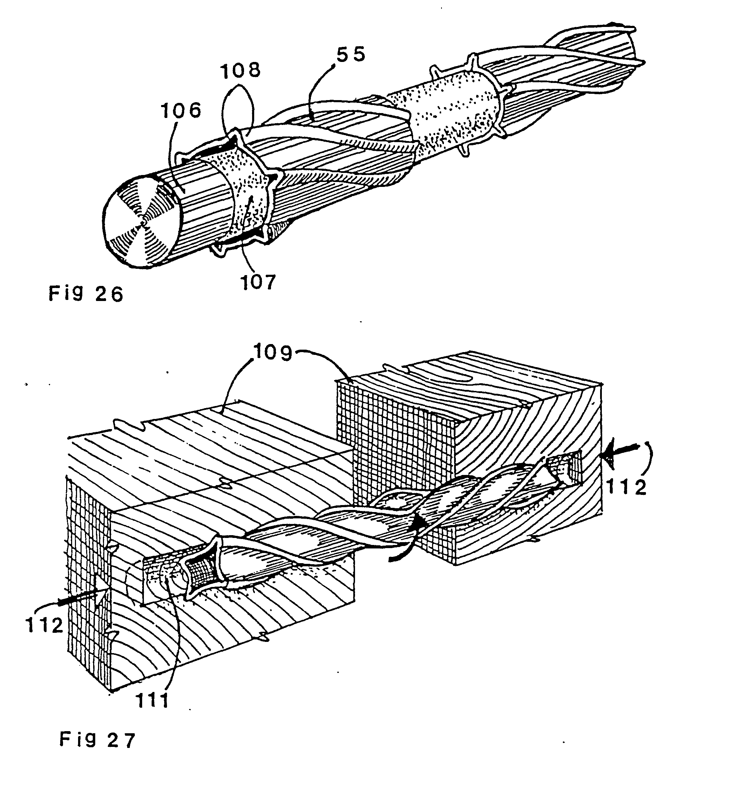

FIGURE 26 shows the formed tube 55 acting as non-corrosive sheathing for a rod 106 to be used for reinforcing concrete. The rod is coated with a synthetic resin 107 and slipped into an oversize tube of bronze which is then passed through a die which acts to close the sides 108 of the projections as shown at the left in FIGURE 26 so that the crimped tube grips the rod tightly as shown at the right in FIGURE 26.

Two pieces of timber 109 can be connected together secretly by drilling bores 111 in each piece of timber and using the tube of FIGURE 4 with helical projections of opposite hands and forcing it into the two bores by driving the two pieces of timber together as shown by the arrows 112 in FIGURE 27.

In some cases it will be useful to bond the formed tube into the bore where is fixed, possibly by using a synthetic resin adhesive in fluid form, which can be injected into voids between the external surface of the tube and the wall of the bore. Again the bonding material or a grout can be injected into the hole before the tube is forced in. Also the tube can be forced into mortar before the mortar has set.

Again the adhesive could be fed down the interior of the tube after the tube has been inserted in its bore, and forced beyond the inner end of the tube and around to the outside of the inner end.

Where the inner leaf of a double-leaf cavity wall is of hollow bricks, then the tube can be inserted in a fabric sock, and when adhesive is forced into the space it can penetrate the rock which can deform to be keyed into position in relation to both the wall and the tube.

If the material in which the tube is pushed is too hard to be cut into, nevertheless if the bore is slightly undersized, the external projections 16 can be forced inwards because of the elasticity of the material and the hollow interior and then the elasticity will exert a spring-like pressure against the walls, and if some of the tube protrudes beyond the other side of the material, that will tend to recover its full dimension to prevent easy withdrawal.

Although in the uses described a pilot hole has been provided, whether slightly undersized or a tight fit for the formed tube, it is possible in soft materials like timber to drive the tube directly into the wood but that may be assisted by forming a cutting lead-in edge to the tube perhaps in the manner shown in FIGURE 7.

If it is desired to produce a tube with the formed helical projections only at one end of its length, the circular tube can be pushed into the die such as the die of FIGURE 12, and then withdrawn before it has been completely pushed through the die.

In general the formed tube can be used in the manner described in British patent Specification No. 8226984 acting as a dowel for fixing the components together, or as an anchorage for a screw or a bolt of the like. However, the extruded dowels described in that specification were not capable of expansion by driving an oversized shaft down the central bore so that the present arrangement formed by deforming thin wall metal tube has advantages over that earlier dowel.

The formed tube can be used as a tie bar by pushing into concrete which has been poured but not set, or even being positioned in relation to shuttering before the conrete is poured, or grouted into a pocket formed in the concrete.

One particularly useful application of the formed tube is as a component linking masonry on either side of a wall cavity.

The bores are drilled in both wall leaves from one side and then the tube is driven into position in one of the ways described above, and it will be noted that if there is insulating slab material in the cavity the tube can pierce that without leaving an unfilled perforation whereas if there is no filling in the cavity the helical projections provide drip points to stop water from crossing the cavity.

Another use is in linking new masonry walls to existing ones with one end of a tube anchored in a hole in the existing wall, and the other bedded in a mortar joint of the new wall, so that it is not necessary to cut out bricks in the old wall to effect a bond.

The tube can be formed into tubular or blind rivets or tubular nails whether with pinched in ends or open ends capable of splitting into divergent anchor arms.

It is to be noted that if a spigot is used to expand or lock the tube it could have a pointed end such as shown in FIGURE 25 for example, which could be used for cutting a pilot hole in advance of the tube.

The tubes, which provide by a process of longitudinal and helical folding, pronounced ridges capable of cutting seatings when driven by hammer blows into most materials commonly used in buildings, are formed from circular drawn tubes of non-ferrous metals which are work hardened and strengthened by the processes of drawing and folding, and which provide good resistance to corrosive environments and also to weakening by temperatures normally encountered in fires in buildings. Apart from various new uses on their own in cut lengths they are particularly suitable for use when these characteristics are required as components of certain fixing devices which have been in use before without the novel formed tube.

## Claims

1. A fastening device comprising a metal tube of uniform cross-section with a wall which is thin compared with a cross-sectional diameter or width of the tube, which tube has been deformed to have at least, one external elongate projection (16) with a sharp edge, and has a helical twist along its length.

2. A device as claimed in Claim 1 in which the tube has also one or more internal projections.

3. A device as claimed in Claim 1 or Claim 2 in which there is a plurality of external elongate projections with sharp edges.

4. A device as claimed in any preceding claim having an external helical thread superimposed around the external elongate projections, but of a much shallower pitch than the external projections.

5. A device as claimed in any preceding claim of a hard, but non-corrosive metal, for example, copper.

6. A device as claimed in any preceding claim used as a tie between the two leaves of a cavity wall or to fasten a batten to a wall.

7. A method of making a fastening device as claimed in any preceidng claim in which a metal tube with a thin-walled uniform circular cross-section is fed axially into a forming die (51) for forming one or more external sharp-edged helical projections on the outside of the tube while the die is permitted to turn in relation to the unformed tube.

8. A forming die (34) for use in the method claimed in Claim 7, which die is mounted in a holder (32) through a bearing (33) permitting the die to rotate.

9. A die as claimed in Claim 8 in which the die has a lead-in portion (35) for accommodating the end of the unformed metal tube and for guiding it into the forming portion of the die.

10. A method of using a fastening device as claimed in any of Claims 1 to 6, in which the device is driven into a piece of material, and the elongate projection or projections cut corresponding grooves in the material.

## Patentansprüche

1. Befestigungsvorrichtung, umfassend ein Rohr aus Metall von gleichmäßigem Querschnitt mit einer gegenüber einem Querschnittsdurchmesser oder einer Querschnittsbreite des Rohres dünnen Wand, bei welcher das Rohr so verformt worden ist, daß es mindestens einen äußeren Vorsprung (16) von überwiegender Längserstreckung mit einer scharfen Kante aufweist, und über seiner ganzen Länge einen spiraligen Drall hat.

2. Vorrichtung nach Anspruch 1, bei welcher das Rohr auch einen oder mehrere innere Vorsprünge aufweist.

3. Vorrichtung nach Anspruch 1 oder Anspruch 2, bei welcher eine Vielzahl von äußeren Vorsprüngen von überwiegender Längserstreckung mit scharfen Kanten vorgesehen ist.

4. Vorrichtung nach einem der vorhergehenden Ansprüche, bei welcher den äußeren Vorsprüngen von überwiegender Längserstreckung ringsum ein äußerer spiraliger Faden überlagert ist, der jedoch eine flachere Steigung als die äußeren Vorsprünge aufweist.

5. Vorrichtung nach einem der vorhergehenden Ansprüche aus einem harten, aber korrosionsbeständigen Metall, z.B. aus Kupfer.

6. Vorrichtung nach einem der vorhergehenden Ansprüche, verwendet als Zugstange zwischen den beiden Wanddicken einer Hohlwand oder zum Befestigen einer Latte an einer Wand.

7. Verfahren zum Herstellen einer Befestigungsvorrichtung nach einem der vorhergehenden Ansprüche, bei welchem ein Rohr aus Metall von dünnwandigem, gleichmäßigem, kreisrundem Querschnitt axial in ein Umformgesenk (51) zum Ausbilden von einem oder mehreren äußeren, scharfkantigen, spiraligen Vorsprüngen an der Außenseite des Rohres zugeführt wird, wobei das Gesenk sich in bezug auf das nicht umgeformte Rohr drehen kann.

8. Umformgesenk (34) zur Verwendung im Verfahren gemäß Anspruch 7, wobei das Gesenk in einem Halter (32) über ein Lager (33), das eine Drehbewegung des Gesenks ermöglicht, angeordnet ist.

9. Gesenk nach Anspruch 8, bei dem das Gesenk eine Einführerleichterung (35) zur Aufnahme des Endes vom nicht umgeformten Rohr aus Metall und zum Führen desselben in den Umformteil des Gesenks aufweist.

10. Verfahren zur Verwendung einer Befestigungsvorrichtung nach einem der Ansprüche 1 bis 6, bei welchem die Vorrichtung in ein Stück Werkstoff getrieben wird und der oder die Vorsprünge von überwiegender Längserstreckung entsprechende Nuten in den Werkstoff schneiden.

## Revendications

1. Dispositif de chevillage comportant un tube métallique de section droite uniforme, avec une paroi qui est peu épaisse en comparaison du diamètre ou de la largeur de la section droite du tube, ledit tube ayant été déformé pour présenter au moins une saillie extérieure de forme allongée (16) à arête vive et présentant une torsion hélicoïdale sur toute sa longueur.

2. Dispositif selon la revendication 1, dans lequel le tube présente également une ou plusieurs saillies intérieures.

3. Dispositif selon la revendication 1 ou la revendication 2, dans lequel il y a une pluralité de saillies extérieures de forme allongée à arêtes vives.

4. Dispositif selon l'une quelconque des revendications précédentes, présentant un filet hélicoïdal extérieur superposé autour des saillies extérieures de forme allongée, mais d'un pas de beaucoup inférieur à celui des saillies extérieures.

5. Dispositif selon l'une quelconque des revendications précédentes, en un matériau dur, non corrosif, par exemple en cuivre.

6. Dispositif selon l'une quelconque des revendications précédentes, utilisé comme liaison entre les deux faces d'une paroi creuse, ou pour fixer une baguette à une paroi.

7. Procédé de fabrication d'un dispositif de chevillage selon l'une quelconque des revendications précédentes, selon lequel on fait passer un tube métallique de section droite circulaire uniforme et de paroi mince, axialement, dans une filière de formage (51) pour former une ou plusieurs saillies hélicoïdales extérieures à arête vive sur l'extérieur du tube, pendant que la filière peut tourner par rapport au tube non formé.

8. Filière de formage (34) utilisable dans le procédé revendiqué à la revendication 7, ladite filière étant montée dans un porte-filière (32) par l'intermédiaire d'un roulement (33) qui permet à la filière de tourner.

9. Filière selon la revendication 8, dans laquelle la, filière présente une portion d'entrée (35) pour recevoir l'extrémité du tube métallique non formé, et pour le guider dans la portion de la filière qui assure le formage.

10. Procédé d'utilisation d'un dispositif de chevillage selon l'une quelconque des revendications 1 à 6, selon lequel on introduit le dispositif dans une pièce de matériau, et selon lequel la ou les saillies de forme allongée découpent des rainures correspondantes dans le matériau.

A

B

C

D

E

F

G

H

I

J

·4r

1r

·75r

Fig 1

1

Fig 2

Fig 3

Fig 4

Fig5

Fig 6

Fig 7a

Fig 7b

Fig 8

Fig 9

Fig 10

Fig 11

EP 0 150 906 B1

Fig 12

Fig 13

section A-A

Fig 14

Fig 15

Fig 16

Fig 17

Fig 18

Fig 19

Fig 20

7

**Fig 21**

**Fig 22**

**Fig 23**

**Fig 24**

**Fig 25**

8

Fig 26

Fig 27